# EUROPEAN PATENT APPLICATION

(11) **EP 4 156 775 A1**
(43) Date of publication of application: **29.03.2023**
(21) Application number: 20939245.5
(22) Date of filing: 05.06.2020
(51) Int. Cl.: H04W 36/00, H04W 24/00

(54) **METHOD AND APPARATUS FOR DETERMINING BEHAVIOR OF TERMINAL DEVICE, AND TERMINAL DEVICE**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN)
(74) Representative: Taor, Simon Edward William
(86) International application number: PCT/CN2020/094743
(87) International publication number: WO 2021/243717

(57) **Abstract**

Provided are a method and apparatus for determining the behavior of a terminal device, and a terminal device. The method comprises: a terminal device determining that a first behavior and a second behavior are executed simultaneously, wherein the first behavior comprises at least one of the following: sounding reference signal (SRS) carrier switching, SRS port switching, antenna switching, antenna port switching, bandwidth part (BWP) switching, cell switching and multiple-in multiple-out (MIMO) layer switching, and the second behavior comprises at least one of the following: a measurement behavior and a transmission behavior; and the terminal device executing one of the first behavior and the second behavior.

## Description

### Technical Field

Embodiments of the present application relate to the field of mobile communication technologies, and more specifically, to a method and an apparatus for determining a behavior of a terminal device, and a terminal device.

### Background

A terminal device may need to execute two behaviors based on a configuration by a network side, which are referred to as a first behavior and a second behavior for convenience of description, wherein execution of the first behavior may cause a conflict with execution of the second behavior, for example, the execution of the first behavior causes the terminal device to perform resource switching and thus cannot execute the second behavior. In this case, it is not clear how the terminal device executes the two behaviors.

### Summary

The embodiments of the present application provide a method and an apparatus for determining a behavior of a terminal device, and a terminal device.

A method for determining a behavior of a terminal device according to an embodiment of the present application includes following acts: determining, by a terminal device, that a first behavior and a second behavior are executed simultaneously; wherein the first behavior includes at least one of following: Sounding Reference Signal (SRS) carrier switching, SRS port switching, antenna switching, antenna port switching, Band Width Part (BWP) switching, cell handover, and Multiple In Multiple Out (MIMO) layer switching; the second behavior includes at least one of following: a measurement behavior and a transmission behavior; and executing, by the terminal device, one of the first behavior and the second behavior.

An embodiment of the present application provides an apparatus for determining a behavior of a terminal device, which is applied to the terminal device, and the apparatus includes: a determination unit, configured to determine that a first behavior and a second behavior are executed simultaneously; wherein the first behavior includes at least one of following: Sounding Reference Signal (SRS) carrier switching, SRS port switching, antenna switching, antenna port switching, Band Width Part (BWP) switching, cell handover, and Multiple In Multiple Out (MIMO) layer switching; the second behavior includes at least one of following: a measurement behavior and a transmission behavior; and an execution unit, configured to execute one of the first behavior and the second behavior.

An embodiment of the present application provides a terminal device, which includes a processor and a memory. The memory is configured to store a computer program, and the processor is configured to call and run the computer program stored in the memory to execute the above method for determining the behavior of the terminal device.

An embodiment of the present application provides a chip, which is configured to achieve the above method for determining the behavior of the terminal device.

Specifically, the chip includes a processor, which is configured to call and run a computer program from a memory to enable a device installed with the chip to execute the above method for determining the behavior of the terminal device.

An embodiment of the present application provides a computer readable storage medium configured to store a computer program, and the computer program enables a computer to execute the above method for determining the behavior of the terminal device.

An embodiment of the present application provides a computer program product including computer program instructions, and the computer program instructions enable a computer to execute the above method for determining the behavior of the terminal device.

An embodiment of the present application provides a computer program that, when running on a computer, enables the computer to execute the above method for determining the behavior of the terminal device.

According to the above technical solutions, when the terminal device determines that the first behavior and the second behavior are executed simultaneously (i.e. the first behavior and the second behavior conflict), an execution mode of a behavior of the terminal device is defined, i.e. the terminal device executes one of the first behavior and the second behavior.

### Brief Description of Drawings

Accompanying drawings described herein are intended to provide further understanding of the present application, and constitute a part of the present application. Exemplary embodiments of the present application and descriptions thereof are intended to explain the present application, but do not constitute an inappropriate limitation to the present application. There are following accompanying drawings.
FIG. 1 is a schematic diagram of architecture of a communication system according to an embodiment of the present application.
FIG. 2 is a schematic flowchart of a method for determining a behavior of a terminal device according to an embodiment of the present application.
FIG. 3 is a schematic diagram of structure composition of an apparatus for determining a behavior of a terminal device according to an embodiment of the present application.
FIG. 4 is a schematic structure diagram of a communication device according to an embodiment of the present application.
FIG. 5 is a schematic structure diagram of a chip according to an embodiment of the present application.
FIG. 6 is a schematic block diagram of a communication system according to an embodiment of the present application.

### Detailed Description

Technical solutions in the embodiments of the present application will be described below with reference to the accompanying drawings in the embodiments of the present application. It is apparent that the embodiments described are just a part of the embodiments of the present application, rather than all of the embodiments of the present application. Based on the embodiments of the present application, all other embodiments achieved by a person of ordinary skill in the art without making inventive efforts are within the protection scope of the present application.

The technical solutions of the embodiments of the present application may be applied to various communication systems, such as a Long Term Evolution (LTE) system, an LTE Frequency Division Duplex (FDD) system, an LTE Time Division Duplex (TDD) system, a 5G system or a future communication system.

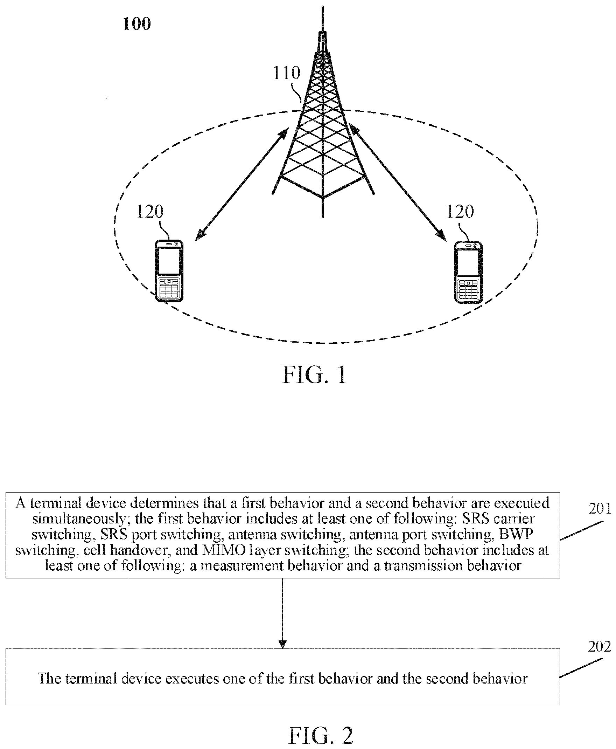

Illustratively, a communication system 100 in which an embodiment of the present application is applied is shown in FIG. 1. The communication system 100 may include a network device 110. The network device 110 may be a device that communicates with a terminal 120 (or referred to as a communication terminal, or a terminal). The network device 110 may provide communication coverage for a specific geographical area, and may communicate with a terminal located within the coverage area. Optionally, the network device 110 may be an Evolutional Node B (eNB or eNodeB) in an LTE system, or a radio controller in a Cloud Radio Access Network (CRAN), or the network device may be a mobile switching center, a relay station, an access point, a vehicle-mounted device, a wearable device, a hub, a switch, a bridge, a router, a network side device in a 5G network, or a network device in a future communication system, etc.

The communication system 100 further includes at least one terminal 120 located within the coverage area of the network device 110. The "terminal" as used herein includes, but is not limited to, an apparatus configured to receive/send communication signals via a wired line connection, for example, via a Public Switched Telephone Networks (PSTN), a Digital Subscriber Line (DSL), a digital cable, or a direct cable; and/or another data connection/network; and/or via a wireless interface, for example, for a cellular network, a Wireless Local Area Network (WLAN), a digital television network such as a Digital Video Broadcasting-Handheld (DVB-H) network, a satellite network, or an Amplitude Modulation - Frequency Modulation (AM-FM) broadcast transmitter; and/or another terminal; and/or an Internet of Things (IoT) device. A terminal configured to communicate via a wireless interface may be referred to as "a wireless communication terminal", "a wireless terminal", or "a mobile terminal". Examples of the mobile terminal include, but are not limited to, a satellite or cellular phone; a Personal Communications System (PCS) terminal capable of combining a cellular radio phone with data processing, facsimile, and data communication capabilities; a Personal Digital Assistant (PDA) that may include a radio phone, a pager, internet/intranet access, a Web browser, a memo pad, a calendar, a Global Positioning System (GPS) receiver; and a conventional laptop and/or palmtop receiver or another electronic apparatus including a radio phone transceiver. The terminal may refer to an access terminal, a User Equipment (LTE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, a vehicle-mounted device, a wearable device, a terminal in a 5G network, or a terminal in future evolved Public Land Mobile Network (PLMN), etc.

Optionally, Device to Device (D2D) communication may be performed between terminals 120.

Optionally, a 5G communication system or a 5G network may also be referred to as a New Radio (NR) system or an NR network.

FIG. 1 illustrates exemplarily one network device and two terminals. Optionally, the communication system 100 may include multiple network devices, and other numbers of terminals may be included within a coverage area of each network device, which is not limited in the embodiments of the present application.

Optionally, the communication system 100 may also include another network entity, such as a network controller, a mobile management entity, etc., which is not limited in the embodiments of the present application.

It should be understood that a device with a communication function in a network/system in the embodiments of the present application may also be referred to as a communication device. Taking the communication system 100 shown in FIG. 1 as an example, the communication device may include a network device 110 and a terminal 120 which have communication functions, and the network device 110 and the terminal 120 may be specific devices described above, and will not be described repeatedly herein. The communication device may further include another device in the communication system 100, such as a network controller, a mobile management entity, and another network entity, which is not limited in the embodiments of the present application.

It should be understood that the terms "system" and "network" are often used interchangeably herein. The term "and/or" herein refers to an association relationship describing associated objects only, which indicates that three kinds of relationships may exist, for example, A and/or B may indicate three cases: A alone, both A and B at the same time, and B alone. In addition, the symbol "/" herein generally indicates that objects before and after the symbol "/" have an "or" relationship.

In order to facilitate understanding of the technical solutions of the embodiments of the present application, the technical solutions related to the embodiments of the present application will be explained below.

### ● Measurement

In order to better achieve mobility switching of a terminal device, a network side may configure the terminal device to measure a Reference Signal Received Power (RSRP) or Reference Signal Received Quality (RSRQ) or a Signal to Interference plus Noise Ratio (SINR) of a reference signal of a target neighbor region of a same frequency, different frequencies, or different Radio Access Technologies (RATs) in a specific time window, wherein the specific time window refers to a measurement gap.

In New Radio (NR) Release 15 (Rel-15), in addition to less than 6 GHz, a millimeter wave frequency band above 6 Ghz is also introduced into a working frequency range of a terminal device. Therefore, according to whether the terminal device supports a capability of a Frequency Range 1 (FR1) or a Frequency Range 2 (FR2), a measurement gap for a UE (per UE) and a measurement gap for a FR (per FR) are defined in Radio Access Network 4 (RAN4), wherein the measurement gap per UE may also be referred to as gapUE, and the measurement gap per FR includes gapFR1 and gapFR2. At the same time, the terminal device also introduces capability indication information (i.e., independentGapConfig) of independent gap measurements in different frequency ranges, and the indication information is used for indicating whether the measurement gap per FR may be configured. Contents of the independentGapConfig may be seen in Table 1 below.

**Table 1**

| | | | | |
|---|---|---|---|---|
| MeasGapConfig:: = | | | SEQUENCE { | |
| | gapFR2 | | | SetupRelease {GapConfig} |
| OPTIONAL, | | --Need M | | |
| | gapFR1 | | | SetupRelease {GapConfig} |
| OPTIONAL, | | --Need M | | |
| | gapUE | | | SetupRelease {GapConfig} |
| OPTIONAL | | --Need M | | |
| } | | | | |

- gapFR1: a measurement gap configuration is only applicable to FR1, and gapFR1 and gapUE do not support simultaneous configuration. In addition, in an Evolved Universal Terrestrial Radio Access (E-UTRA)-NR Dual Connectivity (EN-DC) mode, gapFR1 does not support a configuration through an NR Radio Resource Control (RRC) signaling, and only an LTE RRC signaling may configure gapFR1.
- gapFR2: a measurement gap configuration is only applicable to FR2, and gapFR2 and gapUE do not support simultaneous configuration.
- gapUE: a measurement gap configuration is applicable to all frequency bands, specifically including FR1 and FR2. In the EN-DC mode, only the LTE RRC signaling may configure gapUE, and gapLTE does not support a configuration through an NR RRC signaling. If gapUE is configured, gapFR1 or gapFR2 cannot be configured.

### ● Capability of a terminal device

A capability of independent gap measurements in different frequency ranges (i.e., Per FR gap capability): if the terminal device supports the Per FR gap capability, it indicates that the terminal device supports an independent radio frequency or baseband design of FR1 and FR2, and has terminal behaviors such as an independently handling measurement and switching of related frequency bands or carriers of FR1 and FR2.

A high-speed rail Radio Resource Management (RRM) enhanced capability: the high-speed rail RRM enhanced capability includes a high-speed rail enhanced measurement capability, such as an LTE high-speed rail enhanced measurement capability and an NR high-speed rail enhanced measurement capability. If the terminal device supports the high-speed rail enhanced measurement capability, it indicates that the terminal device supports a high-speed rail enhanced measurement behavior. Indication information of the high-speed rail enhanced measurement capability is achieved through HighSpeedConfig, and contents of HighSpeedConfig are shown in Table 2 below.

**Table 2**

| | | | | |
|---|---|---|---|---|
| HighSpeedConfig-rl4 :: = | | | SEQUENCE { | |
| | highSpeedEnhancedMeasFlag-r14 | | | ENUMERATED {true} |
| | OPTIONAL, | --Need OR | | |
| | highSpeedEnhancedDemodulationFlag-r14 | | | ENUMERATED {true} |
| | OPTIONAL | --Need OR | | |
| } | | | | |
| HighSpeedConfig-v1530 :: = | | | SEQUENCE { | |
| | highSpeedMeasGapCE- ModeA -r 15 | | | ENUMERATED {true} |
| } | | | | |
| HighSpeedConfigSCell-r14 :: = | | | SEQUENCE { | |
| | highSpeedEnhancedDemodulationFlag-r14 | | | ENUMERATED {true} |
| | OPTIONAL | --Need OR | | |
| } | | | | |

Further, a network side may configure (or indicate) to the terminal device whether the network side supports perFRgap or high-speed rail enhanced measurement. The network side may also configure (or instruct) the terminal device to perform a high-priority measurement on some NR frequency points or LTE frequency points, and the high-priority measurement may be, for example, an Early Measurement (EM). The above configuration contents may be achieved through a System Information Block (SIB) message or an RRC signaling.

### ● Measurement type

Types of measurement include: an NR measurement, an LTE measurement (i.e. E-UTRA measurement), a Layer 3 (L3) mobility measurement, a positioning measurement, an interference cancellation measurement, an early measurement, and so on.

Types of measurement further include: a measurement for Radio Link Monitor (RLM), measurements for Beam Failure Detection (BFD) and Candidate Beam Detection (CBD) (e.g. L1 measurements).

### ● Switching behavior and interruption

Types of switching behaviors are: Sounding Reference Signal (SRS) carrier switching, SRS port switching, antenna switching, antenna port switching, Band Width Part (BWP) switching, cell handover, and Multiple In Multiple Out (MIMO) layer switching.

Generally, a certain delay is needed when the above switching behavior occurs, and interruption of transmission (including uplink and downlink) or measurement may be brought for a period of time. It should be noted that embodiments of the present application collectively refer to "sending" and "receiving" as "transmitting".

Particularly, in the EN-DC mode or an NR-E-UTRA Dual Connectivity (NE-DC) mode, the network side considers that since there is no real-time and efficient interaction between two Cell Groups (CGs), it is impossible to guarantee that a configuration of SRS carrier switching of one CG will not conflict with a measurement of the other CG. At the same time, the terminal device needs to spend extra time to coordinate an LTE modem and an NR modem, which makes it difficult to avoid an influence of that SRS carrier switching of one CG interrupts the measurement or data transmission of the other CG.

However, in Rel-15, RAN4 agreed that a Synchronization Signal Block (SSB) measurement takes precedence over uplink transmission. Similar to an LTE system, a measurement behavior based on an SSB or a Channel Status Indicator Reference Signal (CSI-RS) in an NR system takes precedence over an SRS carrier switching behavior of NR, that is, if there is a conflict between the two, the terminal device and the network side will suspend or interrupt SRS carrier switching first to execute the measurement behavior. However, for an impact of SRS carrier switching of an LTE side on an NR measurement or SRS carrier switching of an NR side on an LTE measurement, terminals, chips, and network manufacturers hold different views on how to standardize behaviors of a terminal device, and a unified solution still cannot be formed in standardization discussion. To this end, following technical solutions of the embodiments of the present application are proposed.

FIG. 2 is a schematic flowchart of a method for determining a behavior of a terminal device according to an embodiment of the present application. As shown in FIG. 2, the method for determining the behavior of the terminal device includes following acts.

In act 201, a terminal device determines that a first behavior and a second behavior are executed simultaneously; wherein the first behavior includes at least one of following: SRS carrier switching, SRS port switching, antenna switching, antenna port switching, BWP switching, cell handover, and MIMO layer switching; the second behavior includes at least one of following: a measurement behavior and a transmission behavior.

In an embodiment of the present application, the terminal device receives first configuration information and second configuration information sent by a network side, the first configuration information is used for the terminal device to execute the first behavior, and the second configuration information is used for the terminal device to execute the second behavior. The terminal device may determine whether the first behavior and the second behavior are configured to be executed simultaneously based on the first configuration information and the second configuration information. If the first behavior and the second behavior are configured to be executed simultaneously, since a capability of the terminal device cannot simultaneously execute the first behavior and the second behavior, it is considered that the first behavior and the second behavior conflict, for example, execution of the first behavior will cause a conflict to the second behavior (i.e., the second behavior cannot be normally executed).

In an example, the first behavior and the second behavior are executed simultaneously, which may mean that the first behavior and the second behavior are triggered simultaneously.

In another example, the first behavior and the second behavior are executed simultaneously, which may mean that execution of the second behavior is triggered during a process in which the first behavior is being executed. Or, execution of the first behavior is triggered during a process in which the second behavior is being executed.

In an embodiment of the present application, the first behavior includes at least one of following: SRS carrier switching, SRS port switching, antenna switching, antenna port switching, BWP switching, cell handover, and MIMO layer switching.

In an embodiment of the present application, the second behavior includes at least one of following: a measurement behavior and a transmission behavior. Here, a type of measurement corresponding to the measurement behavior may refer to the foregoing related description. It should be noted that the transmission behavior includes an uplink transmission behavior and/or a downlink transmission behavior.

In act 202, the terminal device executes one of the first behavior and the second behavior.

In an embodiment of the present application, if the first behavior and the second behavior are executed simultaneously, execution of the first behavior will affect execution of the second behavior, that is, the first behavior and the second behavior conflict. The following describes how the terminal device executes the two behaviors in combination with different situations.

### ● Situation one

The first behavior and the second behavior respectively correspond to different RATs; or, the first behavior and the second behavior correspond to a same RAT.

No matter what working mode the terminal device is in, 1) in an optional mode, the terminal device interrupts the first behavior and executes the second behavior; after the terminal device executes the second behavior, the first behavior is executed. Or, 2) in another optional mode, the terminal device abandons execution of the first behavior and executes the second behavior.

In an example, the first behavior is SRS carrier switching and the second behavior is a measurement behavior. No matter what working mode the terminal device is in, SRS carrier switching is stopped, and a measurement behavior is executed, and the SRS carrier switching is started after the measurement behavior is completed; or, SRS carrier switching triggered this time is abandoned and stopped, and a measurement behavior is executed.

In an example, RATs corresponding to the first behavior and the second behavior are both NR, according to the above solution, NR SRS carrier switching needs to be interrupted or abandoned, and the NR SRS carrier switching does not affect an NR measurement behavior (such as NR SSB measurement or NR CSI-RS measurement).

In an example, RATs corresponding to the first behavior and the second behavior are both LTE, according to the above solution, LTE SRS carrier switching needs to be interrupted or abandoned, and the LTE SRS carrier switching does not affect an LTE measurement behavior.

According to the above technical solution, stability of measurement is ensured and functions such as mobility management, beam management are preferentially ensured to be uninterrupted.

### ● Situation two

The first behavior and the second behavior respectively correspond to different RATs.

No matter what working mode the terminal device is in, 1) in an optional mode, the terminal device interrupts the second behavior and executes the first behavior; after the terminal device executes the first behavior, the second behavior is executed. Or, 2) in another optional mode, the terminal device abandons execution of the second behavior and executes the first behavior.

In an example, the first behavior is SRS carrier switching and the second behavior is a measurement behavior. No matter what working mode the terminal device is in, the measurement behavior is stopped, and SRS carrier switching is executed, and the measurement behavior is started after the SRS carrier switching is completed.

According to the above technical solution, priority of SRS carrier switching is ensured, so that uplink detection of different carriers or a requirement of uplink positioning may be completed more quickly, and performance loss of a general measurement which is not in a hurry may be controlled even if it is interrupted.

### ● Situation three

The terminal device determines to execute one of the first behavior and the second behavior according to a capability of the terminal device.

A1) In an optional mode, if the terminal device supports a capability of independent gap measurements in different frequency ranges, the terminal device interrupts the first behavior for NR FR2 and executes the second behavior for NR FR1. Further, optionally, the terminal device interrupts the second behavior for NR FR2.

In an example, the first behavior is SRS carrier switching and the second behavior is a measurement behavior. According to the above solution, SRS carrier switching of NR FR2 cannot affect a measurement behavior of NR FR1 or LTE. Optionally, an influence of interruption is allowed for a measurement behavior of NR FR2.

A2) In an optional mode, if the terminal device supports a capability of independent gap measurements in different frequency ranges, the terminal device interrupts the first behavior for NR FR1 and executes the second behavior for NR FR2. Further, optionally, the terminal device interrupts the second behavior for NR FR1.

In an example, the first behavior is SRS carrier switching and the second behavior is a measurement behavior. According to the above solution, SRS carrier switching of NR FR1 cannot affect a measurement of NR FR2, but an influence of interruption is allowed for measurements of NR FR1 and LTE.

B1) In an optional mode, if the terminal device does not support a capability of independent gap measurements in different frequency ranges, the terminal device interrupts the second behavior and executes the first behavior, or the terminal device interrupts the first behavior and executes the second behavior.

Here, the first behavior includes at least one of following: the first behavior for NR FR1, the first behavior for NR FR2; the second behavior includes at least one of following: the second behavior for NR FR1, and the second behavior for NR FR2.

In an example, the first behavior is SRS carrier switching and the second behavior is a measurement behavior. According to the above solution, one of following may be regarded as a behavior specified in a standard: 1. measurement behaviors can be all influenced by SRS carrier switching and interrupted; or, 2. all measurement behaviors cannot be influenced by SRS carrier switching and interrupted. Here, a measurement behavior is not limited to a measurement behavior of FR1 or FR2, and SRS carrier switching is not limited to SRS carrier switching of FR1 or FR2. That is to say, whether the measurement behavior of FR1 or FR2 or the SRS carrier switching of FR1 or FR2, it may be stipulated in the standard that measurement behaviors can be all influenced by SRS carrier switching and interrupted, or, all measurement behaviors cannot be influenced by SRS carrier switching and interrupted.

B2) In an optional mode, if the terminal device does not support a capability of independent gap measurements in different frequency ranges, the terminal device determines whether to interrupt the second behavior and execute the first behavior or interrupt the first behavior and execute the second behavior based on its own implementation.

Here, the first behavior includes at least one of following: the first behavior for NR FR1, the first behavior for NR FR2; the second behavior includes at least one of following: the second behavior for NR FR1, and the second behavior for NR FR2.

In an example, the first behavior is SRS carrier switching and the second behavior is a measurement behavior. According to the above solution, a terminal may determine based on its own implementation: 1. measurement behaviors can be all influenced by SRS carrier switching and interrupted; or, 2. all measurement behaviors cannot be influenced by SRS carrier switching and interrupted.

It should be noted that in the above solution, the capability of independent gap measurements in different frequency ranges may also be called per FR gap capability.

According to the above technical solution, for a terminal device (which may be considered as well designed) supporting some measurement capabilities, stability of measurement is ensured, and functions such as mobility management and beam management are preferentially ensured to be uninterrupted. For a general terminal device, priority of SRS carrier switching is ensured, so that uplink detection of different carriers or a requirement of uplink positioning may be completed more quickly, and performance loss of a general measurement which is not in a hurry may be controlled even if it is interrupted.

### ● Situation four

The terminal device determines to execute one of the first behavior and the second behavior according to a configuration by a network side.

C1) In an optional mode, if the network side configures the terminal device to be in a dual connectivity mode, the terminal device interrupts the first behavior and executes the second behavior for a first RAT, wherein, in the dual connectivity mode, a RAT of a Master Node (MN) is the first RAT and a RAT of a Secondary Node (SN) is a second RAT.
1. In an optional mode, the dual connectivity mode is an EN-DC mode, correspondingly, the first RAT is LTE and the second RAT is NR; the terminal device interrupts the first behavior for LTE and the first behavior for NR, and executes the second behavior for an LTE frequency point.
   In an example, if it is currently the EN-DC mode, it is considered that an LTE node is a network access anchor point (i.e., MN), so a measurement priority of an LTE side frequency point is high, and it is necessary to ensure that LTE idle state cell selection and reselection, or a connection state switching measurement, or the like are not affected by other behaviors, so neither LTE SRS carrier switching nor NR SRS carrier switching can cause an interruption influence on an LTE intra-RAT measurement or an NR inter-RAT measurement. It should be noted that a target frequency point of the LTE intra-RAT measurement or the NR inter-RAT measurement is an LTE frequency point.
2. In another optional mode, the dual connectivity mode is an NE-DC mode, correspondingly, the first RAT is NR and the second RAT is LTE; the terminal device interrupts the first behavior for LTE and the first behavior for NR, and executes the second behavior for an NR frequency point.

In an example, if it is currently an NE-DC mode, it is considered that an NR node is a network access anchor point (i.e., MN), so a measurement priority of an NR frequency point is high. Similarly, neither LTE SRS carrier switching nor NR SRS carrier switching can cause an interruption influence on an NR intra-RAT measurement or an LTE inter-RAT measurement. It should be noted that a target frequency point of the NR intra-RAT measurement or the LTE inter-RAT measurement is an NR frequency point.

C2) if the network side configures the terminal device to be in a dual connectivity mode, the terminal device interrupts the second behavior and executes the first behavior for a first RAT, wherein, in the dual connectivity mode, a RAT of a MN is the first RAT and a RAT of an SN is a second RAT.
1. In an optional mode, the dual connectivity mode is an EN-DC mode, correspondingly, the first RAT is LTE and the second RAT is NR; the terminal device interrupts the second behavior for LTE and the second behavior for NR, and executes the first behavior for an LTE frequency point.
2. In another optional mode, the dual connectivity mode is an NE-DC mode, correspondingly, the first RAT is NR and the second RAT is LTE; the terminal device interrupts the second behavior for LTE and the second behavior for NR, and executes the first behavior for an NR frequency point.

C3) if the network side configures the terminal device to be in a Stand Alone (SA) mode, the terminal device interrupts the first behavior and executes the second behavior for a first RAT; wherein a RAT of an access node in the SA mode is the first RAT.
1. In an optional mode, the SA mode is an LTE SA mode, and correspondingly, the first RAT is LTE; the terminal device interrupts the first behavior for LTE and the first behavior for NR, and executes the second behavior for an LTE frequency point.
   In an example, if it is currently an LTE SA network, it is considered that all measurements involving LTE frequency points, such as an LTE intra-RAT measurement or an NR inter-RAT measurement, cannot be influenced by LTE SRS carrier switching or NR SRS carrier switching.
2. In another optional mode, the SA mode is an NR SA mode, and correspondingly, the first RAT is NR; the terminal device interrupts the first behavior for LTE and the first behavior for NR, and executes the second behavior for an NR frequency point.

In an example, if it is currently an NR SA network, it is considered that all measurements involving NR frequency points, such as an NR intra-RAT measurement or an LTE inter-RAT measurement, cannot be influenced by LTE SRS carrier switching or NR SRS carrier switching.

C4) if the network side configures the terminal device to be in a SA mode, the terminal device interrupts the second behavior and executes the first behavior for a first RAT; wherein a RAT of an access node in the SA mode is the first RAT.
1. In an optional mode, the SA mode is an LTE SA mode, and correspondingly, the first RAT is LTE; the terminal device interrupts the second behavior for LTE and the second behavior for NR, and executes the first behavior for an LTE frequency point.
2. In another optional mode, the SA mode is an NR SA mode, and correspondingly, the first RAT is NR; the terminal device interrupts the second behavior for LTE and the second behavior for NR, and executes the first behavior for an NR frequency point.

According to the above technical solution, the terminal device formulates different terminal device behavior determination methods under different modes or scenarios, so as to give a priority to an important behavior such as cell handover and access, ensure stability of measurement, and give a priority to ensuring that functions such as mobility management, beam management are not interrupted.

### ● Situation five

If the first behavior and the second behavior are configured to be executed simultaneously, the terminal device determines that the network side has incorrectly configured at least one of first configuration information and second configuration information. Here, the first configuration information is used for the terminal device to execute the first behavior, and the second configuration information is used for the terminal device to execute the second behavior.

In an example, in a case that the first behavior and the second behavior conflict in CGs of different RATs, for example, LTE SRS carrier switching conflicts with an NR measurement, or NR SRS carrier switching conflicts with an LTE measurement, once the two behaviors conflict, the terminal device considers that a network has incorrectly configured. Further, the terminal device may choose to interrupt or discard one behavior according to any one of the above situations one to four, and execute the other behavior.

According to the above technical solution, implementation complexity of the terminal device may be reduced, and a conflict problem is guaranteed by the network side, and the network side may ensure that a conflict situation does not occur by configuring configuration information of the two behaviors.

### ● Situation six

The second behavior includes a first type of behavior and a second type of behavior, wherein a priority of the first type of behavior is lower than a priority of the second type of behavior; execution of the first behavior can interrupt execution of the first type of behavior but cannot interrupt execution of the second type of behavior.

In an optional mode, a case in which the second behavior is a measurement behavior is taken as an example, distinguishing is performed according to a measurement type, a measurement of the terminal device includes a general measurement (corresponding to the first type of behavior) and one type of special measurement configured by a network (corresponding to the second type of behavior).

In an optional mode, the second type of behavior includes at least one of following: an early measurement behavior, a high-speed rail enhanced measurement behavior, a measurement behavior for fast carrier aggregation establishment, and a measurement behavior for fast dual connectivity establishment.

It should be noted that a special measurement (corresponding to the second type of behavior) configured by the network may be known through an SIB signaling or an RRC dedicated message. Main differences between the special measurement configured by the network and the general measurement are a measured frequency point, a measurement time requirement, etc. Implicitly, a priority of a measurement is also included. Thus, if the terminal device is configured with the special measurement by the network, or reports to the network that a capability supports the special measurement, the first behavior (e.g. SRS carrier switching) is not allowed to affect such type of special measurement even if it may interrupt the general measurement.

The above technical solution satisfies a priority of the special measurement configured by the network.

The technical solution of an embodiment of the present application provides the method for determining the behavior of the terminal device. It solves problems of an impact of the first behavior on the second behavior and how the terminal device executes the second behavior, and how to deal with the first behavior (continue execution, suspend, or terminate, and whether continuing execution will bring interruption of the second behavior) when the terminal device may execute the first behavior and the second behavior at the same time (that is, the first behavior and the second behavior conflict).

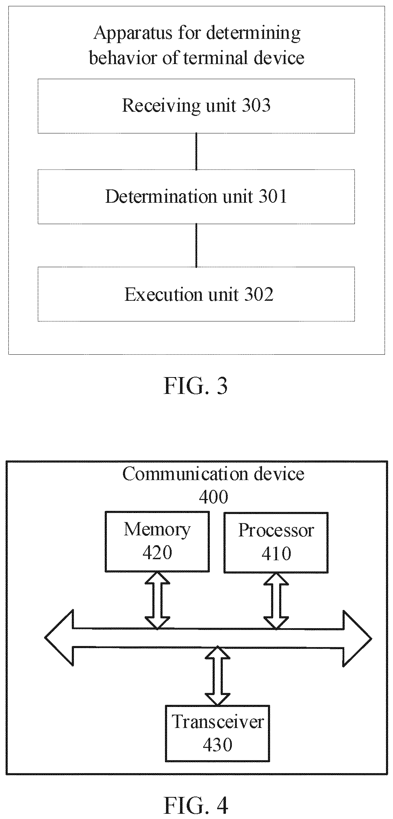

FIG. 3 is a schematic diagram of structure composition of an apparatus for determining a behavior of a terminal device according to an embodiment of the present application, which is applied to the terminal device. As shown in FIG. 3, the apparatus for determining the behavior of the terminal device includes: a determination unit 301, configured to determine that a first behavior and a second behavior are executed simultaneously; wherein the first behavior includes at least one of following: SRS carrier switching, SRS port switching, antenna switching, antenna port switching, BWP switching, cell handover, and MIMO layer switching; the second behavior includes at least one of following: a measurement behavior and a transmission behavior; and an execution unit 302, configured to execute one of the first behavior and the second behavior.

In an optional mode, the execution unit 302 is configured to interrupt the first behavior and execute the second behavior; and execute the first behavior after execution of the second behavior is completed.

In an optional mode, the execution unit 302 is configured to abandon execution of the first behavior and execute the second behavior.

In an optional mode, the first behavior and the second behavior respectively correspond to different RATs; or, the first behavior and the second behavior correspond to a same RAT.

In an optional mode, the execution unit 302 is configured to interrupt the second behavior and execute the first behavior; and execute the second behavior after execution of the first behavior is completed.

In an optional mode, the execution unit 302 is configured to abandon execution of the second behavior and execute the first behavior.

In an optional mode, the first behavior and the second behavior respectively correspond to different RATs.

In an optional mode, the execution unit 302 is configured to determine to execute one of the first behavior and the second behavior according to a capability of the terminal device.

In an optional mode, if the terminal device supports a capability of independent gap measurements in different frequency ranges, the execution unit 302 interrupts the first behavior for NR FR2 and executes the second behavior for NR FR1.

In an optional mode, the execution unit 302 is further configured to interrupt the second behavior for NR FR2.

In an optional mode, if the terminal device supports a capability of independent gap measurements in different frequency ranges, the execution unit 302 interrupts the first behavior for NR FR1 and executes the second behavior for NR FR2.

In an optional mode, the execution unit 302 is further configured to interrupt the second behavior for NR FR1.

In an optional mode, if the terminal device does not support a capability of independent gap measurements in different frequency ranges, the execution unit 302 interrupts the second behavior and executes the first behavior, or the execution unit 302 interrupts the first behavior and executes the second behavior.

In an optional mode, if the terminal device does not support a capability of independent gap measurements in different frequency ranges, the execution unit 302 determines whether to interrupt the second behavior and execute the first behavior, or interrupt the first behavior and execute the second behavior based on the terminal device's own implementation.

In an optional mode, the first behavior includes at least one of following: the first behavior for NR FR1 and the first behavior for NR FR2; the second behavior includes at least one of following: the second behavior for NR FR1 and the second behavior for NR FR2.

In an optional mode, the execution unit 302 is configured to determine to execute one of the first behavior and the second behavior according to a configuration by a network side.

In an optional mode, if the network side configures the terminal device to be in a dual connectivity mode, the execution unit 302 interrupts the first behavior and executes the second behavior for a first RAT, wherein a RAT of a MN in the dual connectivity mode is the first RAT and a RAT of an SN in the dual connectivity mode is a second RAT.

In an optional mode, the dual connectivity mode is an EN-DC mode, correspondingly, the first RAT is LTE and the second RAT is NR; the execution unit 302 is configured to interrupt the first behavior for LTE and the first behavior for NR and execute the second behavior for an LTE frequency point.

In an optional mode, the dual connectivity mode is an NE-DC mode, correspondingly, the first RAT is NR and the second RAT is LTE; the execution unit 302 is configured to interrupt the first behavior for LTE and the first behavior for NR and execute the second behavior for an NR frequency point.

In an optional mode, if the network side configures the terminal device to be in a dual connectivity mode, the execution unit 302 interrupts the second behavior and executes the first behavior for a first RAT, wherein a RAT of a MN in the dual connectivity mode is the first RAT and a RAT of an SN in the dual connectivity mode is a second RAT.

In an optional mode, the dual connectivity mode is an EN-DC mode, correspondingly, the first RAT is LTE and the second RAT is NR; the execution unit 302 is configured to interrupt the second behavior for LTE and the second behavior for NR and execute the first behavior for an LTE frequency point.

In an optional mode, the dual connectivity mode is an NE-DC mode, correspondingly, the first RAT is NR and the second RAT is LTE; the execution unit 302 is configured to interrupt the second behavior for LTE and the second behavior for NR and execute the first behavior for an NR frequency point.

In an optional mode, if the network side configures the terminal device to be in a SA mode, then: the execution unit 302 is configured to interrupt the first behavior and execute the second behavior for a first RAT; or, interrupt the second behavior and execute the first behavior for a first RAT; wherein a RAT of an access node in the SA mode is the first RAT.

In an optional mode, the SA mode is an LTE SA mode, and correspondingly, the first RAT is LTE; the execution unit 302 is configured to interrupt the first behavior for LTE and the first behavior for NR and execute the second behavior for an LTE frequency point; or, interrupt the second behavior for LTE and the second behavior for NR, and execute the first behavior for an LTE frequency point.

In an optional mode, the SA mode is an NR SA mode, and correspondingly, the first RAT is NR; the execution unit 302 is configured to interrupt the first behavior for LTE and the first behavior for NR and execute the second behavior for an NR frequency point; or, interrupt the second behavior for LTE and the second behavior for NR, and execute the first behavior for an NR frequency point.

In an optional mode, the apparatus further includes: a receiving unit 303, configured to receive first configuration information and second configuration information sent by the network side, wherein the first configuration information is used for the terminal device to execute the first behavior, and the second configuration information is used for the terminal device to execute the second behavior; the determination unit 301 is further configured to determine that the network side has incorrectly configured at least one of first configuration information and second configuration information if it is determined that the first behavior and the second behavior are configured to be executed simultaneously.

In an optional mode, the second behavior includes a first type of behavior and a second type of behavior, wherein a priority of the first type of behavior is lower than a priority of the second type of behavior; execution of the first behavior can interrupt execution of the first type of behavior but cannot interrupt execution of the second type of behavior.

In an optional mode, the second type of behavior includes at least one of following: an early measurement behavior, a high-speed rail enhanced measurement behavior, a measurement behavior for fast carrier aggregation establishment, and a measurement behavior for fast dual connectivity establishment.

Those skilled in the art should understand that relevant description of the apparatus for determining the behavior of the terminal device according to an embodiment of the present application may be understood with reference to relevant description of the method for determining the behavior of the terminal device according to an embodiment of the present application.

FIG. 4 is a schematic structure diagram of a communication device 400 in accordance with an embodiment of the present application. The communication device may be a terminal device or a network device. The communication device 400 shown in FIG. 4 includes a processor 410, which may call and run a computer program from a memory to implement the methods in the embodiments of the present application.

Optionally, as shown in FIG. 4, the communication device 400 may further include a memory 420. The processor 410 may invoke and run a computer program from the memory 420 to implement any of the methods in the embodiments of the present application.

The memory 420 may be a separate device independent of the processor 410, or may be integrated in the processor 410.

Optionally, as shown in FIG. 4, the communication device 400 may further include a transceiver 430, and the processor 410 may control the transceiver 430 to communicate with another device. Specifically, the transceiver 630 may send information or data to another device or receive information or data sent by another device.

The transceiver 430 may include a transmitter and a receiver. The transceiver 430 may further include antennas, a quantity of which may be one or more.

Optionally, the communication device 400 may specifically be the network device according to the embodiments of the present application, and the communication device 400 may implement corresponding processes implemented by the network device in various methods in the embodiments of the present application, which will not be repeated here for brevity.

Optionally, the communication device 400 may specifically be the mobile terminal/terminal device in accordance with an embodiment of the present application, and the communication device 400 may implement the corresponding processes implemented by the mobile terminal/terminal device in various methods in the embodiments of the present application, which will not be repeated herein for brevity.

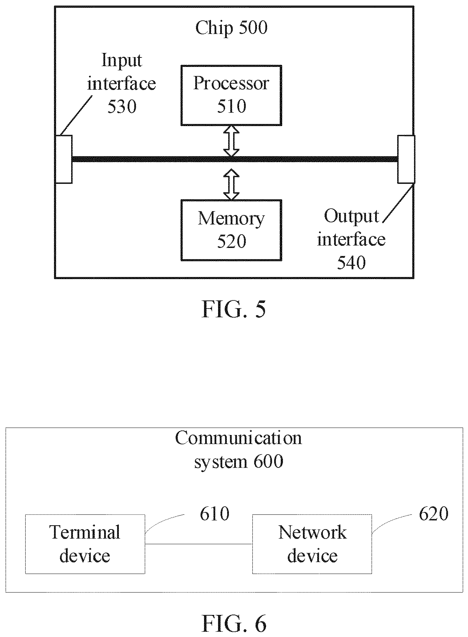

FIG. 5 is a schematic diagram of a structure of a chip according to an embodiment of the present application. The chip 500 shown in FIG. 5 includes a processor 510, wherein the processor 510 may call and run a computer program from a memory to implement a method in an embodiment of the present application.

Optionally, as shown in FIG. 5, the chip 500 may further include a memory 520. The processor 510 may invoke and run a computer program from the memory 520 to implement any of the methods in the embodiments of the present application.

The memory 520 may be a separate device independent of the processor 510, or may be integrated in the processor 510.

Optionally, the chip 500 may further include an input interface 530. The processor 510 may control the input interface 530 to communicate with another device or chip. Specifically, the processor 710 may acquire information or data sent by another device or chip.

Optionally, the chip 500 may further include an output interface 540. The processor 510 may control the output interface 540 to communicate with another device or chip. Specifically, the processor 710 may output information or data to another device or chip.

Optionally, the chip may be applied to the network device in the embodiments of the present application, and the chip may implement the corresponding processes implemented by the network device in the various methods of the embodiments of the present application, which will not be repeated here for brevity.

Optionally, the chip may be applied to the mobile terminal/terminal device in the embodiments of the present application, and the chip may implement corresponding processes implemented by the mobile terminal/terminal device in various methods of the embodiments of the present application, which will not be repeated herein for brevity.

It should be understood that the chip mentioned in the embodiments of the present application may also be referred to as a system-level chip, a system chip, a chip system, or a system on chip, etc.

FIG. 6 is a schematic block diagram of a communication system 600 in accordance with an embodiment of the present application. As shown in FIG. 6, the communication system 600 includes a terminal device 610 and a network device 620.

The terminal device 610 may be configured to implement the corresponding functions implemented by the terminal device in the above-mentioned methods, and the network device 620 may be configured to implement the corresponding functions implemented by the network device in the above-mentioned methods, which will not be repeated herein for brevity.

It should be understood that the processor in the embodiments of the present application may be an integrated circuit chip with a capability for processing signals. In an implementation process, various acts of the method embodiments described above may be completed through an integrated logic circuit of hardware in a processor or instructions in a form of software. The above processor may be a general purpose processor, a Digital Signal Processor (DSP), an Application Specific Integrated Circuit (ASIC), a Field Programmable Gate Array (FPGA), or another programmable logic device, a discrete gate or transistor logic device, or a discrete hardware component. The processor may implement various methods, acts, and logic block diagrams disclosed in the embodiments of the present application. The general purpose processor may be a microprocessor or the processor may be any conventional processor. The acts of the methods disclosed in connection with the embodiments of the present application may be directly embodied by execution of a hardware decoding processor, or by execution of a combination of hardware and software modules in a decoding processor. The software modules may be located in a storage medium commonly used in the art, such as a random access memory, a flash memory, a read-only memory, a programmable read-only memory or an electrically erasable programmable memory, or a register. The storage medium is located in a memory, and a processor reads information in the memory and completes the acts of the above methods in combination with its hardware.

It should be understood that the memory in the embodiments of the present application may be a transitory memory or a non-transitory memory, or may include both transitory and non-transitory memories. The non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM) which serves as an external cache. As an example, but not as a limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that the above memories are described as examples rather than limitations. For example, the memory in the embodiments of the present application may be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct Rambus RAM (DR RAM), etc. That is to say, the memories in the embodiments of the present application are intended to include, but are not limited to, these and any other suitable types of memories.

An embodiment of the present application further provides a computer readable storage medium, configured to store a computer program.

Optionally, the computer readable storage medium may be applied to the network device in the embodiments of the present application, and the computer program causes a computer to perform the corresponding processes implemented by the network device in various methods in accordance with the embodiments of the present application, which will not be repeated herein for brevity.

Optionally, the computer readable storage medium may be applied to the mobile terminal/terminal device in the embodiments of the present application, and the computer program causes a computer to perform the corresponding processes implemented by the mobile terminal/terminal device in various methods in accordance with the embodiments of the present application, which will not be repeated herein for brevity.

An embodiment of the present application further provides a computer program product, including computer program instructions.

Optionally, the computer program product may be applied to the network device in the embodiments of the present application, and the computer program instructions cause a computer to perform the corresponding processes implemented by the network device in various methods in accordance with the embodiments of the present application, which will not be repeated herein for brevity.

Optionally, the computer program product may be applied to the mobile terminal/terminal device in the embodiments of the present application, and the computer program instructions cause a computer to perform the corresponding processes implemented by the mobile terminal/terminal device in various methods in accordance with the embodiments of the present application, which will not be repeated herein for brevity.

An embodiment of the present application further provides a computer program.

Optionally, the computer program may be applied to the network device in the embodiments of the present application. When the computer program is run on a computer, the computer is enabled to perform corresponding processes implemented by the network device in various methods according to the embodiments of the present application, which will not be repeated here for brevity.

Optionally, the computer program may be applied to the mobile terminal/terminal device in the embodiments of the present application. The computer program, when running on a computer, causes the computer to perform the corresponding processes implemented by the mobile terminal/terminal device in various methods in accordance with the embodiments of the present application, which will not be repeated herein for brevity.

Those of ordinary skills in the art will recognize that units and algorithm acts of various examples described in connection with the embodiments disclosed herein may be implemented in electronic hardware, or a combination of computer software and electronic hardware. Whether these functions are implemented in a form of hardware or software depends on a specific application and a design constraint of a technical solution. Those skilled in the art may use different methods to implement the described functions for each specific application, but such implementation should not be considered to be beyond the scope of the present application.

Those skilled in the art may clearly understand that for convenience and conciseness of description, specific working processes of the systems, apparatuses, and units described above may refer to corresponding processes in the aforementioned method embodiments, and details will not be repeated here.

In several embodiments according to the present application, it should be understood that the disclosed systems, apparatuses, and methods may be implemented in other ways. For example, the device embodiments described above are only illustrative, for example, the division of the units is only a logical function division, and there may be other division manners in actual implementation. For example, multiple units or components may be combined or integrated into another system, or some features may be ignored or not executed. In addition, coupling or direct coupling or communication connection shown or discussed between each other, which may be indirect coupling or communication connection between the devices or units via some interfaces, may be electrical, mechanical, or in other forms.

The units described as separate components may be or may be not physically separated, and the component shown as a unit may be or may be not a physical unit, i.e., it may be located in one place or may be distributed on multiple network units. Part or all of units may be selected according to actual needs to achieve purposes of technical solutions of the embodiments.

In addition, various functional units in various embodiments of the present application may be integrated in one processing unit, or various units may be physically present separately, or two or more units may be integrated in one unit.

The functions, if implemented in a form of software functional units and sold or used as an independent product, may be stored in a computer readable storage medium. Based on such understanding, the technical solutions of the present application, in essence, or parts of them which contribute to the prior art, or parts of the technical solutions, may be embodied in a form of a software product, which is stored in a storage medium, and includes several instructions for enabling a computer device (which may be a personal computer, a server, or a network device, etc.) to perform all or part of the acts of the methods of various embodiments of the present application. And the aforementioned storage medium includes various media, such as a U disk, a mobile hard disk, a Read-Only Memory (ROM), a Random Access Memory (RAM), a magnetic disk, or an optical disk, etc., which may store program codes.

The foregoing are merely specific embodiments of the present application, but the protection scope of the present application is not limited thereto. Any person skilled in the art may readily conceive variations or substitutions within the technical scope disclosed by the present application, which should be included within the protection scope of the present application. Therefore, the protection scope of the present application shall be subject to the protection scope of the claims.

## Claims

1. A method for determining a behavior of a terminal device, comprising:
determining, by a terminal device, that a first behavior and a second behavior are executed simultaneously; wherein the first behavior comprises at least one of following: Sounding Reference Signal (SRS) carrier switching, SRS port switching, antenna switching, antenna port switching, Band Width Part (BWP) switching, cell handover, and Multiple In Multiple Out (MIMO) layer switching; the second behavior comprises at least one of following: a measurement behavior and a transmission behavior; and
executing, by the terminal device, one of the first behavior and the second behavior.

2. The method of claim 1, wherein the executing, by the terminal device, one of the first behavior and the second behavior, comprises:
interrupting, by the terminal device, the first behavior and executing the second behavior; and
executing, by the terminal device, the first behavior after execution of the second behavior is completed.

3. The method of claim 1, wherein the executing, by the terminal device, one of the first behavior and the second behavior, comprises:
abandoning, by the terminal device, execution of the first behavior and executing the second behavior.

4. The method of claim 2 or 3, wherein
the first behavior and the second behavior correspond to different Network Access Technologies (RATs) respectively; or,
the first behavior and the second behavior correspond to a same RAT.

5. The method of claim 1, wherein the executing, by the terminal device, one of the first behavior and the second behavior, comprises:
interrupting, by the terminal device, the second behavior and executing the first behavior; and
executing, by the terminal device, the second behavior after execution of the first behavior is completed.

6. The method of claim 1, wherein the executing, by the terminal device, one of the first behavior and the second behavior, comprises:
abandoning, by the terminal device, execution of the second behavior and executing the first behavior.

7. The method of claim 5 or 6, wherein the first behavior and the second behavior correspond to different Radio Access Technologies (RATs) respectively.

8. The method of claim 1, wherein the executing, by the terminal device, one of the first behavior and the second behavior, comprises:
determining, by the terminal device, to execute one of the first behavior and the second behavior according to a capability of the terminal device.

9. The method of claim 8, wherein the determining, by the terminal device, to execute one of the first behavior and the second behavior according to the capability of the terminal device, comprises:
interrupting, by the terminal device, the first behavior for New Radio (NR) Frequency Range 2 (FR2) and executing the second behavior for NR Frequency Range 1 (FR1) if the terminal device supports a capability of independent gap measurements in different frequency ranges.

10. The method of claim 9, further comprising:
interrupting, by the terminal device, the second behavior for NR FR2.

11. The method of claim 8, wherein the determining, by the terminal device, to execute one of the first behavior and the second behavior according to the capability of the terminal device, comprises:
interrupting, by the terminal device, the first behavior for New Radio (NR) Frequency Range 2 (FR1) and executing the second behavior for NR Frequency Range 1 (FR2) if the terminal device supports a capability of independent gap measurements in different frequency ranges.

12. The method of claim 11, further comprising:
interrupting, by the terminal device, the second behavior for NR FR1.

13. The method of claim 8, wherein the determining, by the terminal device, to execute one of the first behavior and the second behavior according to the capability of the terminal device, comprises:
interrupting, by the terminal device, the second behavior and executing the first behavior, or interrupting, by the terminal device, the first behavior and executing the second behavior if the terminal device does not support a capability of independent gap measurements in different frequency ranges.

14. The method of claim 8, wherein the determining, by the terminal device, to execute one of the first behavior and the second behavior according to the capability of the terminal device, comprises:
determining, by the terminal device, whether to interrupt the second behavior and execute the first behavior or interrupt the first behavior and execute the second behavior based on the terminal device's own implementation if the terminal device does not support a capability of independent gap measurements in different frequency ranges.

15. The method of claim 13 or 14, wherein
the first behavior comprises at least one of following: the first behavior for New Radio (NR) Frequency Range 1 (FR1) and the first behavior for NR Frequency Range 2 (FR2);
the second behavior comprises at least one of following: the second behavior for NR FR1 and the second behavior for NR FR2.

16. The method of claim 1, wherein the executing, by the terminal device, one of the first behavior and the second behavior, comprises:
determining, by the terminal device, to execute one of the first behavior and the second behavior according to a configuration by a network side.

17. The method of claim 16, wherein the determining, by the terminal device, to execute one of the first behavior and the second behavior according to the configuration by the network side, comprises:
interrupting, by the terminal device, the first behavior and executing the second behavior for a first Radio Access Technology (RAT) if the network side configures the terminal device to be in a dual connectivity mode, wherein a RAT of a Master Node (MN) in the dual connectivity mode is the first RAT and a RAT of a Secondary Node (SN) in the dual connectivity mode is a second RAT.

18. The method of claim 17, wherein the dual connectivity mode is an Evolved Universal Terrestrial Radio Access (E-UTRA)-New Radio (NR) Dual Connectivity (EN-DC) mode, correspondingly, the first RAT is Long Term Evolution (LTE) and the second RAT is NR;
the interrupting, by the terminal device, the first behavior and executing the second behavior for the first RAT, comprises:
interrupting, by the terminal device, the first behavior for LTE and the first behavior for NR, and executing the second behavior for an LTE frequency point.

19. The method of claim 17, wherein the dual connectivity mode is a New Radio (NR)-Evolved Universal Terrestrial Radio Access (E-UTRA) Dual Connectivity (NE-DC) mode, correspondingly, the first RAT is NR and the second RAT is Long Term Evolution (LTE);
the interrupting, by the terminal device, the first behavior and executing the second behavior for the first RAT, comprises:
interrupting, by the terminal device, the first behavior for LTE and the first behavior for NR, and executing the second behavior for an NR frequency point.

20. The method of claim 16, wherein the determining, by the terminal device, to execute one of the first behavior and the second behavior according to the configuration by the network side, comprises:
interrupting, by the terminal device, the second behavior and executing the first behavior for a first Radio Access Technology (RAT) if the network side configures the terminal device to be in a dual connectivity mode, wherein a RAT of a Master Node (MN) in the dual connectivity mode is the first RAT and a RAT of a Secondary Node (SN) in the dual connectivity mode is a second RAT.

21. The method of claim 20, wherein the dual connectivity mode is an Evolved Universal Terrestrial Radio Access (E-UTRA)-New Radio (NR) Dual Connectivity (EN-DC) mode, correspondingly, the first RAT is Long Term Evolution (LTE) and the second RAT is NR;
the interrupting, by the terminal device, the second behavior and executing the first behavior for the first RAT, comprises:
interrupting, by the terminal device, the second behavior for LTE and the second behavior for NR, and executing the first behavior for an LTE frequency point.

22. The method of claim 20, wherein the dual connectivity mode is a New Radio (NR)-Evolved Universal Terrestrial Radio Access (E-UTRA) Dual Connectivity (NE-DC) mode, correspondingly, the first RAT is NR and the second RAT is Long Term Evolution (LTE);
the interrupting, by the terminal device, the second behavior and executing the first behavior for the first RAT, comprises:
interrupting, by the terminal device, the second behavior for LTE and the second behavior for NR, and executing the first behavior for an NR frequency point.

23. The method of claim 16, wherein the determining, by the terminal device, to execute one of the first behavior and the second behavior according to the configuration by the network side, comprises:
interrupting, by the terminal device, the first behavior and executing the second behavior for a first Radio Access Technology (RAT); or, interrupting, by the terminal device, the second behavior and executing the first behavior for a first RAT, if the network side configures the terminal device to be in a Stand Alone (SA) mode;
wherein a RAT of an access node in the SA mode is the first RAT.

24. The method of claim 23, wherein the SA mode is a Long Term Evolution (LTE) SA mode, and correspondingly the first RAT is LTE;
the interrupting, by the terminal device, the first behavior and executing the second behavior for the first RAT, comprises: interrupting, by the terminal device, the first behavior for LTE and the first behavior for New Radio (NR), and executing the second behavior for an LTE frequency point;
the interrupting, by the terminal device, the second behavior and executing the first behavior for the first RAT, comprises: interrupting, by the terminal device, the second behavior for LTE and the second behavior for NR, and executing the first behavior for an LTE frequency point.

25. The method of claim 23, wherein the SA mode is a New Radio (NR) SA mode, and correspondingly the first RAT is NR;
the interrupting, by the terminal device, the first behavior and executing the second behavior for the first RAT, comprises: interrupting, by the terminal device, the first behavior for Long Term Evolution (LTE) and the first behavior for NR, and executing the second behavior for an NR frequency point;
the interrupting, by the terminal device, the second behavior and executing the first behavior for the first RAT, comprises: interrupting, by the terminal device, the second behavior for LTE and the second behavior for NR, and executing the first behavior for an NR frequency point.

26. The method of any one of claims 1 to 25, further comprising:
receiving, by the terminal device, first configuration information and second configuration information sent by a network side, wherein the first configuration information is used for the terminal device to execute the first behavior, and the second configuration information is used for the terminal device to execute the second behavior; and
determining, by the terminal device, that the network side has incorrectly configured at least one of the first configuration information and the second configuration information if the first behavior and the second behavior are configured to be executed simultaneously.

27. The method of any one of claims 1 to 26, wherein the second behavior comprises a first type of behavior and a second type of behavior, wherein a priority of the first type of behavior is lower than a priority of the second type of behavior;
execution of the first behavior can interrupt execution of the first type of behavior but cannot interrupt execution of the second type of behavior.

28. The method of claim 27, wherein the second type of behavior comprises at least one of following: an early measurement behavior, a high-speed rail enhanced measurement behavior, a measurement behavior for fast carrier aggregation establishment, and a measurement behavior for fast dual connectivity establishment.

29. An apparatus for determining a behavior of a terminal device, which is applied to the terminal device, wherein the apparatus comprises:
a determination unit, configured to determine that a first behavior and a second behavior are executed simultaneously; wherein the first behavior comprises at least one of following: Sounding Reference Signal (SRS) carrier switching, SRS port switching, antenna switching, antenna port switching, Band Width Part (BWP) switching, cell handover, and Multiple In Multiple Out (MIMO) layer switching; the second behavior comprises at least one of following: a measurement behavior and a transmission behavior; and
an execution unit, configured to execute one of the first behavior and the second behavior.

30. The apparatus of claim 29, wherein the execution unit is configured to interrupt the first behavior and execute the second behavior; and execute the first behavior after execution of the second behavior is completed.

31. The apparatus of claim 29, wherein the execution unit is configured to abandon execution of the first behavior and execute the second behavior.

32. The apparatus of claim 30 or 31, wherein
the first behavior and the second behavior correspond to different Radio Access Technologies (RATs) respectively; or,
the first behavior and the second behavior correspond to a same RAT.

33. The apparatus of claim 29, wherein the execution unit is configured to interrupt the second behavior and execute the first behavior; and execute the second behavior after execution of the first behavior is completed.

34. The apparatus of claim 29, wherein the execution unit is configured to abandon execution of the second behavior and execute the first behavior.

35. The apparatus of claim 33 or 34, wherein the first behavior and the second behavior correspond to different Radio Access Technologies (RATs) respectively.

36. The apparatus of claim 29, wherein the execution unit is configured to determine to execute one of the first behavior and the second behavior according to a capability of the terminal device.

37. The apparatus of claim 36, wherein the execution unit interrupts the first behavior for New Radio (NR) Frequency Range 2 (FR2) and executes the second behavior for NR Frequency Range 1 (FR1) if the terminal device supports a capability of independent gap measurements in different frequency ranges.

38. The apparatus of claim 37, wherein the execution unit is further configured to interrupt the second behavior for NR FR2.

39. The apparatus of claim 36, wherein the execution unit interrupts the first behavior for New Radio (NR) Frequency Range 1 (FR1) and executes the second behavior for NR Frequency Range 2 (FR2) if the terminal device supports a capability of independent gap measurements in different frequency ranges.

40. The apparatus of claim 39, wherein the execution unit is further configured to interrupt the second behavior for NR FR1.

41. The apparatus of claim 36, wherein the execution unit interrupts the second behavior and executes the first behavior, or the terminal device interrupts the first behavior and executes the second behavior, if the terminal device does not support a capability of independent gap measurements in different frequency ranges.

42. The apparatus of claim 36, wherein the execution unit determines whether to interrupt the second behavior and execute the first behavior, or interrupt the first behavior and execute the second behavior based on the terminal device's own implementation if the terminal device does not support a capability of independent gap measurements in different frequency ranges.

43. The apparatus of claim 41 or 42, wherein
the first behavior comprises at least one of following: the first behavior for New Radio (NR) Frequency Range 1 (FR1) and the first behavior for NR Frequency Range 2 (FR2);
the second behavior comprises at least one of following: the second behavior for NR FR1 and the second behavior for NR FR2.

44. The apparatus of claim 29, wherein the execution unit is configured to determine to execute one of the first behavior and the second behavior according to a configuration by a network side.

45. The apparatus of claim 44, wherein if the network side configures the terminal device to be in a dual connectivity mode, the execution unit interrupts the first behavior and executes the second behavior for a first Radio Access Technology (RAT), wherein a RAT of a Master Node (MN) in the dual connectivity mode is the first RAT and a RAT of a Secondary Node (SN) in the dual connectivity mode is a second RAT.

46. The apparatus of claim 45, wherein the dual connectivity mode is an Evolved Universal Terrestrial Radio Access (E-UTRA)-New Radio (NR) Dual Connectivity (EN-DC) mode, correspondingly, the first RAT is Long Term Evolution (LTE) and the second RAT is New Radio (NR);
the execution unit is configured to interrupt the first behavior for LTE and the first behavior for NR and execute the second behavior for an LTE frequency point.

47. The apparatus of claim 45, wherein the dual connectivity mode is a New Radio (NR)-Evolved Universal Terrestrial Radio Access (E-UTRA) Dual Connectivity (NE-DC) mode, correspondingly, the first RAT is New Radio (NR) and the second RAT is Long Term Evolution (LTE);
the execution unit is configured to interrupt the first behavior for LTE and the first behavior for NR and execute the second behavior for an NR frequency point.

48. The apparatus of claim 44, wherein if the network side configures the terminal device to be in a dual connectivity mode, the execution unit interrupts the second behavior and executes the first behavior for a first Radio Access Technology (RAT), wherein a RAT of a Master Node (MN) in the dual connectivity mode is the first RAT and a RAT of a Secondary Node (SN) in the dual connectivity mode is a second RAT.

49. The apparatus of claim 48, wherein the dual connectivity mode is an Evolved Universal Terrestrial Radio Access (E-UTRA)-New Radio (NR) Dual Connectivity (EN-DC) mode, correspondingly, the first RAT is Long Term Evolution (LTE) and the second RAT is New Radio (NR);
the execution unit is configured to interrupt the second behavior for LTE and the second behavior for NR and execute the first behavior for an LTE frequency point.

50. The apparatus of claim 48, wherein the dual connectivity mode is a New Radio (NR)-Evolved Universal Terrestrial Radio Access (E-UTRA) Dual Connectivity (NE-DC) mode, correspondingly, the first RAT is New Radio (NR) and the second RAT is Long Term Evolution (LTE);
the execution unit is configured to interrupt the second behavior for LTE and the second behavior for NR and execute the first behavior for an NR frequency point.

51. The apparatus of claim 44, wherein if the network side configures the terminal device to be in a Stand Alone (SA) mode, then:
the execution unit is configured to interrupt the first behavior and execute the second behavior for a first Radio Access Technology (RAT); or, interrupt the second behavior and execute the first behavior for a first RAT;
wherein a RAT of an access node in the SA mode is the first RAT.

52. The apparatus of claim 51, wherein the SA mode is a Long Term Evolution (LTE) SA mode, and correspondingly the first RAT is LTE;
the execution unit is configured to interrupt the first behavior for LTE and the first behavior for New Radio (NR) and execute the second behavior for an LTE frequency point; or, interrupt the second behavior for LTE and the second behavior for NR, and execute the first behavior for an LTE frequency point.

53. The apparatus of claim 51, wherein the SA mode is a New Radio (NR) SA mode, and correspondingly the first RAT is NR;
the execution unit is configured to interrupt the first behavior for Long Term Evolution (LTE) and the first behavior for NR and execute the second behavior for an NR frequency point; or, interrupt the second behavior for LTE and the second behavior for NR, and execute the first behavior for an NR frequency point.

54. The apparatus of any one of claims 29 to 53, wherein the apparatus further comprises:
a receiving unit, configured to receive first configuration information and second configuration information sent by a network side, wherein the first configuration information is used for the terminal device to execute the first behavior, and the second configuration information is used for the terminal device to execute the second behavior;
the determination unit is further configured to determine that the network side has incorrectly configured at least one of the first configuration information and the second configuration information if it is determined that the first behavior and the second behavior are configured to be executed simultaneously.

55. The apparatus of any one of claims 29 to 54, wherein the second behavior comprises a first type of behavior and a second type of behavior, wherein a priority of the first type of behavior is lower than a priority of the second type of behavior;
execution of the first behavior can interrupt execution of the first type of behavior but cannot interrupt execution of the second type of behavior.

56. The apparatus of claim 55, wherein the second type of behavior comprises at least one of following: an early measurement behavior, a high-speed rail enhanced measurement behavior, a measurement behavior for fast carrier aggregation establishment, and a measurement behavior for fast dual connectivity establishment.

57. A terminal device, comprising: a processor and a memory, wherein the memory is configured to store a computer program, and the processor is configured to call and run the computer program stored in the memory to perform the method of any one of claims 1 to 28.

58. A chip, comprising: a processor configured to call and run a computer program from a memory, to enable a device having the chip installed therein to implement the method of any one of claims 1 to 28

59. A computer-readable storage medium, configured to store a computer program that enables a computer to implement the method of any one of claims 1 to 28.

60. A computer program product, comprising computer program instructions that enable a computer to implement the method of any one of claims 1 to 28.

61. A computer program, enabling a computer to implement the method of any one of claims 1 to 28.
